# EUROPÄISCHE PATENTSCHRIFT

(11) **EP 0 332 575 B1**
(45) Veröffentlichungstag und Bekanntmachung des Hinweises auf die Patenterteilung: **28.04.1993**
(21) Anmeldenummer: 89810146.4
(22) Anmeldetag: 23.02.1989
(51) Int. Cl.: G01B 5/00

(54) **Taster zur Messwertbildung beim Antasten eines Werkstückes**
Feeler for producing measured value by touching a work piece
Palpeur produisant une valeur de mesure en touchant une pièce à usiner

(30) Priorität: 11.03.1988 CH 923/88
(43) Veröffentlichungstag der Anmeldung: 13.09.1989
(73) Patentinhaber: Saphirwerk Industrieprodukte AG, 2555 Brügg (CH)
(72) Erfinder: Bissegger, Marcel, CH-2553 Safnern (CH); Stegmann, Alain, CH-2502 Biel (CH)
(74) Vertreter: Wenger, René

(56) Entgegenhaltungen:
- DE-A- 3 603 269
- DE-A- 3 701 730
- US-A- 3 250 012

## Beschreibung

Die Erfindung betrifft einen Taster zur Messwertbildung beim Antasten eines Werkstückes gemäss dem Oberbegriff von Anspruch 1. Derartige Taster werden insbesondere bei Mehrkoordinaten-Messmaschinen eingesetzt, bei denen das Werkstück relativ zum Taster in mehreren Achsen verschiebbar ist, wobei der Verschiebeweg gemessen wird und beim Antasten des Werkstückes Messimpulse abgegeben werden.

Die Messmaschinen können dabei mit einem schaltenden Taster versehen sein, bei welchem das Werkstück mit einer äusserst geringen Messkraft angetastet wird und der zurückgelegte Weg im Koordinaten-System im Zeitpunkt der Antastung festgehalten wird. Die Messmaschinen können aber auch mit einem messenden Taster für die kontinuierliche Abtastung von Oberflächen versehen sein, wobei die sich verändernde Auslenkung des Tasters kontinuierlich gemessen und registriert wird. Viele bekannte Taster können für beide Betriebsarten eingesetzt werden.

Ein Problem bei bekannten Vorrichtungen besteht insbesondere bei der Lagerung des auslenkbaren Teils im Tastergehäuse. An diese Lagerung werden höchste Anforderungen bezüglich Präzision und Laufeigenschaften gestellt. Insbesondere bei Dreikoordinaten-Messmaschinen sollte der Taststift mit hoher Präzision in den drei Achsen auslenkbar bzw. verschiebbar sein, ohne dass an der Lagerstelle Spiel oder übermässige Reibung auftritt. Schliesslich soll die Taststiftbewegung aber auch möglichst unmittelbar dem Messelement übermittelt werden, ohne dass aufwendige Uebertragungselemente usw. erforderlich sind. Vorschläge für Lagerungen an Mehrkoordinaten-Tastern sind beispielsweise bereits durch die DE-B-22 42 355 oder durch die DE-B-27 12 181 bekannt geworden. Diese Systeme sind jedoch relativ aufwendig und eignen sich nicht unbedingt für eine Miniaturisierung der Bauteile.

Durch die US-A-3,250,012 ist ein Taster bekannt geworden, bei dem das auslenkbare Teil mit einer Kugelkalotte im Gehäuse gelagert ist, welche durch Federkraft gegen eine Gelenkpfanne gepresst wird. Der Taststift kann dabei in alle Richtungen ausgelenkt werden, oder bei genau axialem Antasten auch gegen das Gehäuseinnere verschoben werden. Ein gegen die ebene Fläche der Kugelkalotte gepresster Schlitten überträgt jede Bewegung der Kugelkalotte aus ihrer neutralen Ruhelage auf ein Messelement. Diese Lagerung ist an sich sehr vorteilhaft, da sie einfach und präzise hergestellt werden kann und da jede Bewegung des Taststifts in eine lineare Bewegung umgesetzt wird, die leicht auf das Messelement zu übertragen ist. Ein Nachteil dieser bekannten Lagerung besteht jedoch darin, dass die Taststiftauslenkung in der X- und Y-Achse ungeführt ist und daher unkontrolliert verlaufen kann. Der Taststift kann sich ausserdem in der Lagerung verdrehen, was bei sternförmigen Taststiften unerwünscht ist und zu falschen Messergebnissen führen würde.
(Siehe auch DE-A-3 603 269)

Es ist daher eine Aufgabe der Erfindung, einen Taster der eingangs genannten Art zu schaffen, bei dem unter Ausnützung der Vorteile einer sphärischen Lagerung präzisere Messergebnisse erzielt werden können. Insbesondere soll die Auslenkung des Taststifts geführt verlaufen und eine Verdrehung des Taststifts soll sowohl bei schaltenden Tastern als auch bei messenden Tastern im kontinuierlichen Scanning-Betrieb verhindert werden. Diese Aufgabe wird erfindungsgemäss mit einem Taster gelöst, der die Merkmale im Anspruch 1 aufweist.

Mit Hilfe des Sicherungselements im Kugelelement kann wenigstens in einer Auslenkebene eine präzise Führung in der neutralen Ausgangslage erreicht werden. Bei schaltenden Tastern spielt es dabei keine Rolle, wenn diese Führung mit beginnender Auslenkung aufgehoben wird und das Sicherungselement dabei nicht mehr in Wirkverbindung mit dem Führungselement steht. Sekundenbruchteile nach dem Beginn der Auslenkung ist das Messergebnis nämlich bereits gespeichert, so dass eine nachfolgende Verdrehung des Taststifts belanglos ist. Die erfindungsgemässe Anordnung gewährleistet jedoch, dass der Taststift in seiner neutralen Ausgangslage verdrehfest im Gehäuse gelagert ist.

Eine besonders vorteilhafte Anordnung ergibt sich, wenn das Sicherungselement ein zylindrischer Stift ist, dessen Achse rechtwinklig zur Mittelachse des auslenkbaren Teils bzw. des Tasters durch den Kugelmittelpunkt verläuft. Bei dieser geometrischen Anordnung kann ersichtlicherweise der Taststift in einer Ebene so ausgelenkt werden, dass sich der zylindrische Stift um seine eigene Achse dreht. Er bleibt dabei im Eingriff mit dem Führungselement. Diese Anordnung ermöglicht eine Führung des Taststifts in der X- und Y-Achse, ohne dass komplizierte Geradeführungssysteme wie z.B. bei der eingangs erwähnten DE-B-22 42 355 erforderlich sind.

Das Führungselement besteht besonders einfach aus zwei parallelen Profilen, zwischen die der zylindrische Stift des Sicherungselementes wenigstens in der neutralen Ausgangsstellung eingreift. Selbstverständlich könnte der zylindrische Stift aber beispielsweise auch in eine Nut an der Gehäuseinnenwand eingreifen. Die parallelen Profile lassen sich jedoch besonders einfach und präzise als zylindrische Stifte ausbilden. Der Eingriff des zylindrischen Stifts des Sicherungselementes wird dabei noch dadurch erleichtert, dass dessen Ende konisch ausgebildet ist.

Wenn der zylindrische Stift axial verschiebbar im Kugelelement gelagert ist und mittels Federvorspannung gegen das Führungselement pressbar ist, kann die hochpräzise Führung nicht nur in der neutralen Ausgangsstellung, sondern auch während einer Auslenkbewegung aufrechterhalten werden. Das konische Ende des zylindrischen Stifts wird dabei spielfrei zwischen die beiden Stifte des Führungselements gepresst. Die dabei verursachte Reibung ist vernachlässigbar und kann durch geeignete Ausbildung des Konuswinkels verkleinert werden. Weitere Vorteile ergeben sich dabei, wenn der zylindrische Stift mit einer Schraube feststellbar ist. Bei schaltendem Betrieb des Tasters kann dabei die Schraube zunächst gelöst werden, so dass der zylindrische Stift in der neutralen Stellung des Taststifts gegen das Führungselement gepresst wird. In dieser Stellung wird die Schraube angezogen, so dass der zylindrische Stift in der neutralen Ausgangslage immer spielfrei zwischen den beiden Profilen des Führungselementes gehalten ist. Wird eine permanente Führung beim Scanning-Betrieb gewünscht, muss die Feststellschraube selbstverständlich gelöst werden, so dass der zylindrische Stift dauernd gegen das Führungselement gepresst wird.

Die Profile des Führungselementes sind vorteilhaft in einem Ring befestigt, der als Lagerstelle für das Kugelelement dient. Das Kugelelement kann dabei direkt im Ring aufliegen. Eine besonders hohe Präzision wird jedoch durch eine Dreipunktelagerung erzielt, bei welcher am Ring drei Lagerkugeln angeordnet sind, auf denen das Kugelelement aufliegt. Der Ring kann am tasterseitigen Ende des Gehäuses in das Gehäuse eingepresst sein, wodurch eine besonders hohe Präzision erreicht werden kann.

Weitere Einzelmerkmale und Vorteile der Erfindung ergeben sich aus der nachfolgenden Beschreibung und aus den Zeichnungen, in denen Ausführungsbeispiele dargestellt sind. Es zeigen:
- Figur 1: einen Querschnitt durch einen erfindungsgemässen Taster in vergrössertem Massstab,
- Figur 2: einen Querschnitt durch die Lagerstelle eines abgewandelten Ausführungsbeispiels,
- Figur 3: einen Horizontalschnitt durch die Ebene I-I gemäss Figur 2, jedoch mit etwas abgewandeltem Zylinderstift,
- Figur 4: eine Draufsicht auf die Lagerstelle des Tasters gemäss Figur 2, und
- Figur 5: eine perspektivische Ansicht des Kugelelements in vereinfachter Darstellungsweise mit den drei Bewegungsachsen.

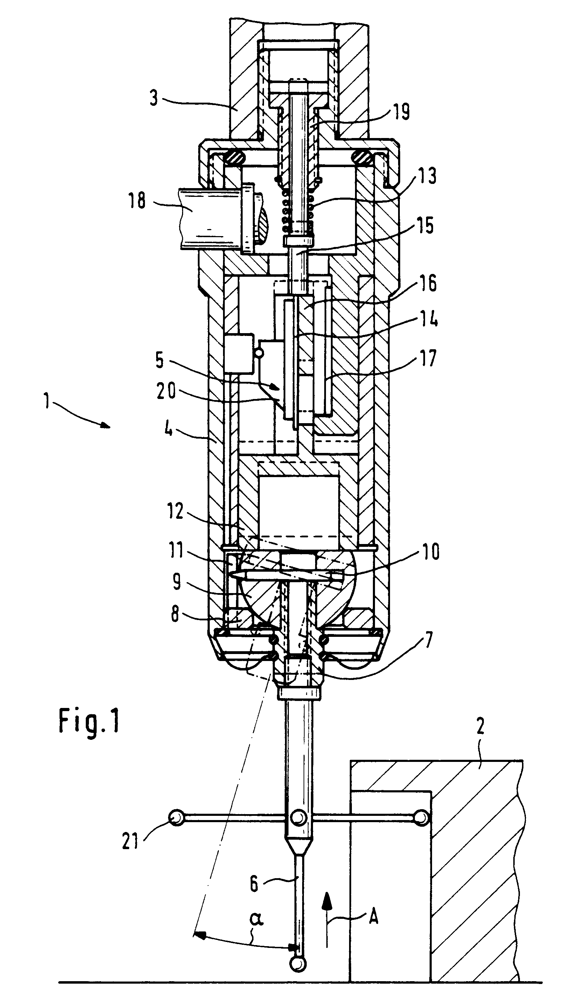

Wie in Figur 1 dargestellt, besteht ein Taster 1 aus einem Gehäuse 4, das vorzugsweise zylindrisch ausgebildet ist. An einem Ende des Gehäuses ist der Taster in eine Halterung 3 eingespannt, die wiederum an einer hier nicht dargestellten Koordinaten-Messmaschine befestigt werden kann. In Figur 1 ist der Taster 1 in etwa 2,5-facher Vergrösserung dargestellt, so dass ersichtlicherweise die Bauteile auf kleinstem Raum mit hoher Präzision untergebracht werden müssen.

Am unteren Ende des Tastergehäuses 4 ist ein auslenkbares Teil 7 gelagert, das einen Taststift 6 zum Antasten eines Werkstücks 2 trägt. Die Taststifte sind austauschbar am auslenkbaren Teil z.B. durch eine Schraubverbindung befestigt, so dass Taststifte verschiedener Konfiguration eingespannt werden können. Im Ausführungsbeispiel ist ein Taststern mit vier Einzelstiften in der horizontalen Ebene und mit einem Stift in Achsrichtung dargestellt. Die Enden der Einzelstifte sind mit Tasterkugeln 21 z.B. aus Rubin versehen.

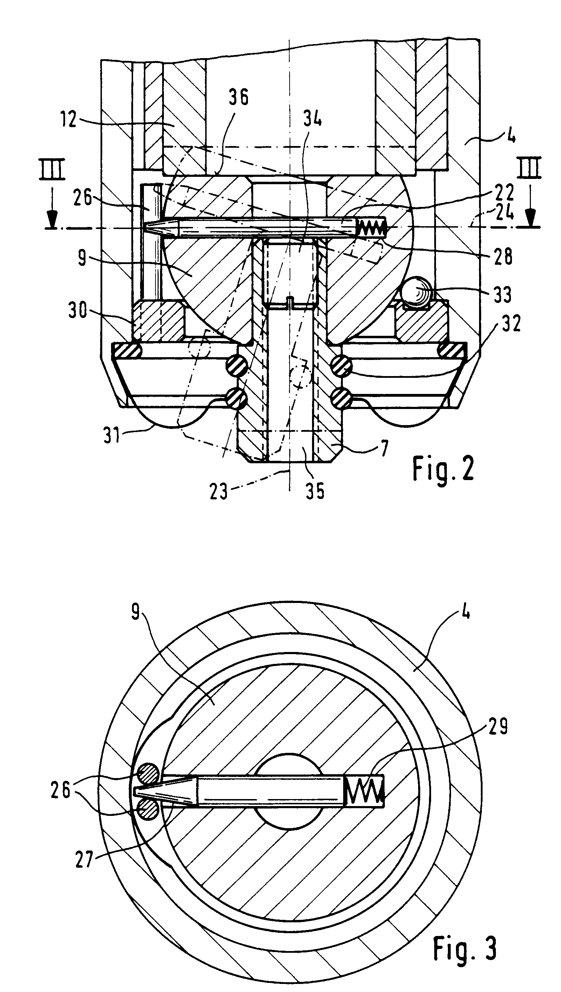

Die Lagerung des auslenkbaren Teils 7 erfolgt mit Hilfe eines Kugelelements 9, das als Kugelkalotte ausgebildet ist. Das Kugelelement wird in Axialrichtung gegen eine Lagerstelle gepresst, wie nachstehend anhand der Figuren 2 bis 4 noch genauer beschrieben wird. Ein Sicherungselement 10 greift in ein gehäusefestes Führungselement 11, so dass der Taststift 6 ersichtlicherweise nicht verdreht werden kann. Durch unterbrochene Linien ist die maximale Auslenkung des auslenkbaren Teils 7 unter einem Winkel Alpha dargestellt. Bei schaltendem Messbetrieb dient diese Auslenkung jedoch nur als Kollisionsschutz bei raschem Antasten des Werkstücks, da das Messergebnis bereits bei geringster Auslenkung des Taststifts 6 registriert und der Vorschub für den Taster abgeschaltet wird.

Im Innern des Gehäuses 4 ist ein linear verschiebbarer Schlitten 12 gelagert. Der Schlitten ist etwa kreisringförmig ausgebildet und wird mittels Federkraft gegen die ebene Fläche der Kugelkalotte gepresst, so dass diese bei unbelastetem Taststift immer eine neutrale Ausgangsstellung einnimmt. Ein Druck auf den Taststift von unten in Pfeilrichtung A bzw. jede zulässige Auslenkung des Taststifts führt ersichtlicherweise zu einer linearen Verschiebung des Schlittens 12 in Pfeilrichtung A.

Die lineare Bewegung wird mit Hilfe eines Messelements 5 in einen Messimpuls umgewandelt. Das Messelement 5 kann je nach Anwendungsfall eine beliebige Ausgestaltung haben. Denkbar wären z.B. induktive oder kapazitive Systeme, piezoelektrische Elemente, magnetische oder optische Mess- und Zählvorrichtungen und dergleichen mehr. Im vorliegenden Ausführungsbeispiel ist ein inkrementales Längenmess-System dargestellt, wie es beispielsweise in der EP-A-237 470 der Anmelderin beschrieben ist. Dabei wird mit Hilfe einer stationär angeordneten Lichtquelle 20 ein gebündelter Lichtstrahl durch einen mit regelmässigen Teilstrichen versehenen, transparenten Massstab 14 geworfen, der auf einem Massstabträger 16 befestigt ist. Der Massstabträger 16 ist die Fortsetzung des Schlittens 12 und wird an seinem oberen Ende von einem Bolzen 15 beaufschlagt, der unter der Kraft der Feder 13 vorgespannt ist. Die gewünschte Federkraft des Bolzens kann dabei mit Hilfe einer Justierschraube 19 eingestellt werden. Die Lichtimpulse werden hinter dem Massstab 14 mit Hilfe einer Empfangseinrichtung 17 registriert und einem hier nicht näher dargestellten Verstärker und Rechner zugeführt. Die elektrische Verbindung mit Bauteilen ausserhalb des Tasters 1 erfolgt über einen Kabelausgang 18. Ersichtlicherweise kann so jede Auslenkung des Taststifts 6 in eine analoge lineare Bewegung umgewandelt werden, die mit höchster Präzision ermittelt und gemessen werden kann.

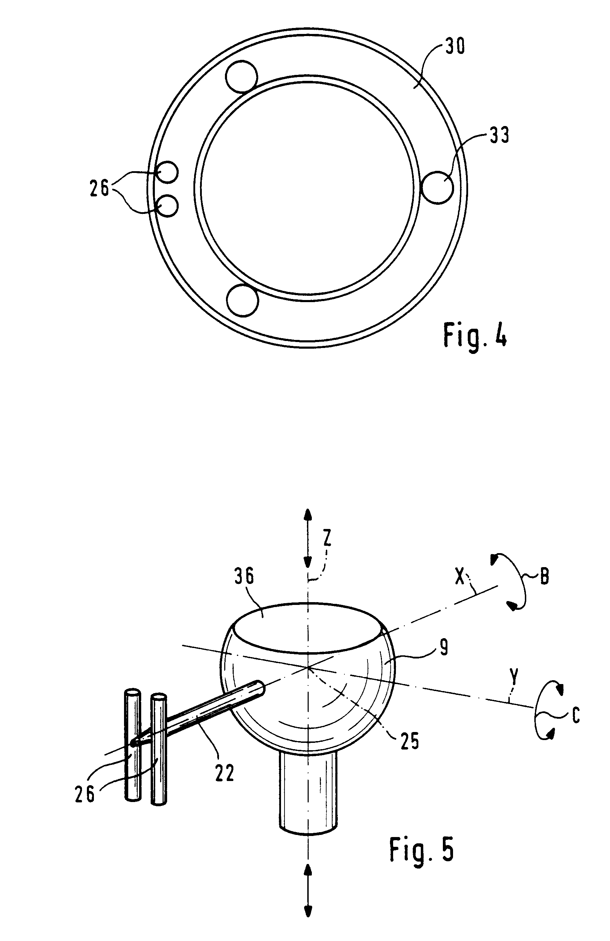

In den Figuren 2 bis 4 ist die Lagerung des Kugelelements 9 bzw. dessen Führung etwas genauer dargestellt, wobei die Bewegungsgeometrie aus Figur 5 ersichtlich ist. Figur 2 zeigt wiederum das auslenkbare Teil 7 am unteren Ende des Gehäuses 4. Dieses Teil ist kraftschlüssig mit dem Kugelelement 9 verbunden, das als Kugelkalotte ausgebildet ist. Es besitzt ausserdem eine Gewindebohrung 35, in welche verschiedene Taststifte eingeschraubt werden können. Um ein Eindringen von Schmutz und Staub in die Lagerstelle zu verhindern, ist das auslenkbare Teil 7 gegenüber dem Gehäuse 4 mit einem elastischen Balg 31 abgedichtet. Ein elastischer Pufferring 32 sorgt ausserdem für einen weichen Anschlag des auslenkbaren Teils 7 am Ring 30.

Die Kugelkalotte 9 wird durch den Schlitten 12, der an der ebenen Fläche 36 angreift, gegen den in das Gehäuse 4 eingepressten Ring 30 gepresst. Anders als beim Ausführungsbeispiel gemäss Figur 1 liegt die Kugelfläche jedoch nicht direkt auf dem Ring auf. Vielmehr ist der Ring 30 in gleichmässigem Winkelabstand mit Lagerkugeln 33 z.B. aus Rubin versehen. Diese Lagerkugeln liegen in Vertiefungen auf und sind z.B. mit dem Ring fest verleimt. Alternativ könnten die Kugeln aber auch in einem Lagerkäfig am Ring 30 gehalten sein und drehbar am Ring 30 gelagert sein. Die Anordnung der Lagerkugeln ist insbesondere aus Figur 4 ersichtlich.

Im Ring 30 sind zwei parallele zylindrische Profile 26 befestigt, deren Achsen parallel zur Mittelachse 23 des auslenkbaren Teils in der neutralen Ausgangsstellung verlaufen. Bei diesen Profilen kann es sich beispielsweise um hochpräzise bearbeitete Hartmetallstifte oder um gehärtete Metallstifte handeln. Quer zur Mittelachse 23 ist in der Kugelkalotte 9 eine Bohrung 28 angeordnet, deren Mittelachse exakt durch das Zentrum 25 der Kugel (Figur 5) verläuft. In dieser Bohrung ist axial verschiebbar und spielfrei ein zylindrischer Stift 22 gelagert. Der verschiebbare Zylinderstift 22 hat an seinem aus der Kugel ragenden Ende einen Konus 27 und wird mit Hilfe einer Feder 29 in der Bohrung 28 gegen die beiden zylindrischen Profile 26 gepresst.

Ersichtlicherweise legt der Konus 27 relativ zu den Profilen 26 beim Auslenken des Taststifts eine bogenförmige Bewegung zurück. Bleibt der Taststift 22 in der Kugelkalotte fixiert, so ist der Konus 27 nur in der neutralen Ausgangsstellung zwischen den beiden Profilen 26 zentriert, während er mit zunehmender Bogenbewegung sich von den Profilen entfernt. Wie bereits erwähnt genügt diese Zentrierung in der neutralen Ausgangsstellung beim schaltenden Betrieb der Messmaschine. Um die neutrale Ausgangsstellung zwischen Konus 27 und Profilen 26 exakt zu definieren, wird eine Madenschraube 34 in der Gewindebohrung 35 in der neutralen Ausgangsstellung gelöst. Anschliessend wird die Madenschraube angezogen, so dass der zylindrische Stift 22 in der Bohrung 28 fixiert bleibt. Auf diese Weise ist die spielfreie Zentrierung des Stifts 22 durch die Profile 26 immer genau in der ursprünglichen neutralen Ausgangslage gewährleistet.

Bei permanent messender Betriebsart bleibt die Madenschraube 34 dauernd gelöst, so dass der Stift 22 nicht nur in der neutralen Ausgangslage, sondern in jeder Schwenklage durch die Profile 26 zentriert wird.

Figur 5 zeigt das Koordinatensystem X-Y-Z, in dem eine Bewegung des Kugelelements 9 möglich ist. Bei einer genau axialen Beaufschlagung des Tasters in der Z-Richtung wird der zylindrische Stift 22 zwischen den beiden Führungsprofilen 26 verschoben, ohne dass sich der rechte Winkel zwischen dem Zylinderstift 22 und den Profilen 26 verändert. Da die Achse des Zylinderstifts 22 genau durch den Kugelmittelpunkt 25 verläuft, kann sich der Stift 22 bei einer Auslenkung des Kugelelementes 9 in der Y-Richtung in Pfeilrichtung B um seine eigene Achse drehen. Dabei erfolgt ersichtlicherweise ebenfalls keine Winkelveränderung zwischen dem Stift 22 und den Profilen 26. Wird das Kugelelement dagegen in der X-Richtung ausgelenkt, so erfolgt eine Drehung um den Kugelmittelpunkt 25 in Pfeilrichtung C, wobei sich der Winkel zwischen dem Zylinderstift 22 und den Führungsprofilen 26 verändert.

## Patentansprüche

1. Taster (1) zur Messwertbildung beim Antasten eines Werkstückes (2), bestehend aus einem Gehäuse (4) mit einem darin angeordneten Messelement (5) und aus einem relativ zum Gehäuse auslenkbaren, wenigstens einen Taststift (6) tragenden Teil (7), das im Gehäuse mittels eines gegen eine Lagerstelle (8) pressbaren Kugelelements (9) gelagert ist, wobei durch dessen Verschiebung und/oder Auslenkung das Messelement aktivierbar ist, dadurch gekennzeichnet, dass das Kugelelement (9) zur Verdrehsicherung des Taststifts (6) mit einem aus dem Kugelelement ragenden Sicherungselement (10) versehen ist, welches wenigstens in der neutralen Ausgangsstellung des auslenkbaren Teils (7) in ein Führungselement (11) eingreift.

2. Taster nach Anspruch 1, dadurch gekennzeichnet, dass das Sicherungselement ein zylindrischer Stift (22) ist, dessen Achse (24) rechtwinklig zur Mittelachse (23) des auslenkbaren Teils (7) bzw. des Tasters (6) durch den Kugelmittelpunkt (25) verläuft.

3. Taster nach Anspruch 2, dadurch gekennzeichnet, dass das Führungselement aus zwei parallelen Profilen (26) besteht, zwischen die der zylindrische Stift (22) des Sicherungselementes wenigstens in der neutralen Ausgangsstellung eingreift.

4. Taster nach Anspruch 3, dadurch gekennzeichnet, dass die Profile (26) des Führungselements zylindrisch ausgebildet sind, und dass das zwischen die Profile eingreifende Ende des zylindrischen Stifts (22) des Sicherungselementes konisch ausgebildet ist.

5. Taster nach Anspruch 4, dadurch gekennzeichnet, dass der zylindrische Stift (22) axial verschiebbar im Kugelelement (9) gelagert ist und mittels Federvorspannung gegen das Führungselement (11 bzw. 26) pressbar ist.

6. Taster nach einem der Ansprüche 3 bis 5, dadurch gekennzeichnet, dass die Profile (26) des Führungselementes in einem Ring (30) befestigt sind, der als Lagerstelle für das Kugelelement (9) dient.

7. Taster nach Anspruch 6, dadurch gekennzeichnet, dass das Kugelelement (9) direkt im Ring (30) aufliegt.

8. Taster nach Anspruch 6, dadurch gekennzeichnet, dass der Ring (30) auf seiner gegen das Gehäuseinnere gerichteten Seite wenigstens drei Lagerkugeln (33) aufweist, und dass das Kugelelement (9) auf den Lagerkugeln (33) aufliegt.

9. Taster nach Anspruch 2 oder 3, dadurch gekennzeichnet, dass der Ring (30) am tasterseitigen Ende des Gehäuses (4) in das Gehäuse eingepresst ist.

10. Taster nach einem der Ansprüche 1 bis 9, dadurch gekennzeichnet, dass das Kugelelement (9) eine Kugelkalotte ist, und dass das Messelement (5) einen linear im Gehäuse (4) verschiebbaren Schlitten (12) aufweist, der mittels Federvorspannung gegen die ebene Fläche (36) der Kugelkalotte pressbar ist, welche im rechten Winkel zur Mittelachse (23) des auslenkbaren Teils (7) bzw. des Tasters angeordnet ist, wobei der Schlitten (12) durch axiale Verschiebung des Tasters gegen das Gehäuseinnere und durch jede zulässige Auslenkung aktivierbar ist.

11. Taster nach Anspruch 5, dadurch gekennzeichnet, dass der zylindrische Stift (22) mit einer Schraube feststellbar ist.

12. Taster nach Anspruch 11, dadurch gekennzeichnet, dass das auslenkbare Teil (7) eine axiale Gewindebohrung (35) zur Aufnahme des Taststifts (6) aufweist, welche über dem zylindrischen Stift endet, und das letzterer mit einer Madenschraube (34) in der axialen Gewindebohrung (35) feststellbar ist.

## Claims

1. A feeler device (1) for measurement value formation when sensing a workpiece (2), comprising a housing (4) with a measuring element (5) arranged therein, and a member (7) which can be deflected relative to the housing and which carries at least one feeler pin (6) and which is mounted in the housing by means of a ball element (9) which can be pressed against a mounting location (8), wherein the measuring element can be activated by displacement and/or deflection of the ball element, characterised in that, for preventing the feeler pin (6) from rotating, the ball element (9) is provided with a securing element (10) which projects out of the ball element and which engages into a guide element (11) at least in the neutral starting position of the deflectable member (7).

2. A feeler device according to claim 1 characterised in that the securing element is a cylindrical pin (22) whose axis (24) extends at a right angle to the centre line (23) of the deflectable member (7) or the feeler member (6) through the centre point (25) of the ball.

3. A feeler device according to claim 2 characterised in that the guide element comprises two parallel shaped members (26), between which the cylindrical pin (22) of the securing element engages, at least in the neutral starting position.

4. A feeler device according to claim 3 characterised in that the shaped members ( 26 ) of the guide element are of a cylindrical configuration and that the end of the cylindrical pin (22) of the securing element, which engages between the shaped members, is of a conical configuration.

5. A feeler device according to claim 4 characterised in that the cylindrical pin (22) is axially slidably mounted in the ball element (9) and can be pressed against the guide element (11 or 26) by means of a spring biasing action.

6. A feeler device according to one of claims 3 to 5 characterised in that the shaped members (26) of the guide element are fixed in a ring (30) rich serves as a mounting location for the ball element (9).

7. A feeler device according to claim 6 characterised in that the ball element (9) is supported directly in the ring (30).

8. A feeler device according to claim 6 characterised in that, on its side which is directed towards the interior of the housing, the ring (30) has at least three bearing balls (33) and that the ball element (9) is supported on the bearing balls (33).

9. A feeler device according to claim 2 or claim 3 characterised in that the ring (30) is pressed into the housing (4) at the end towards the feeler member.

10. A feeler device according to one of claims 1 to 9 characterised in that the ball element (9) is a portion of a sphere and that the measuring element (5) has a slider (12) rich is linearly displaceable in the housing (4) and which can be pressed by means of a spring biasing force against the flat surface (36) of the portion of the sphere, which is arranged at a right angle to the centre line (23) of the deflectable member (7) or the feeler member, wherein the slider (12) can be activated by axial displacement of the feeler member towards the interior of the housing and by any admissible deflection.

11. A feeler device according to claim 5 characterised in that the cylindrical pin (22) can be fixed by a screw.

12. A feeler device according to claim 11 characterised in that the deflectable member (7) has an axial screwthreaded bore (35) for receiving the feeler pin (6), which bore terminates above the cylindrical pin, and that the latter can be fixed by a setscrew (34) in the axial screwthreaded bore (35).

## Revendications

1. Palpeur pour produire une valeur mesurée en touchant une pièce d'oeuvre (2), se composant d'un boîtier (4) avec un élément de mesure (5) disposé à l'intérieur et d'une partie (7) orientable par rapport au boîtier, portant au moins une pointe de palpage (6), et montée dans le boîtier au moyen d'un élément sphérique (9) qui peut être pressé contre un point d'appui (8), l'élément de mesure pouvant être actionné par le déplacement et/ou l'orientation de cet élément sphérique, caractérisé en ce que l'élément sphérique (9) est muni pour éviter une torsion de la pointe de palpage (6) d'un élément d'arrêt (10) dépassant de l'élément sphérique et pénétrant dans un élément de guidage (11) au moins dans la position neutre de départ de la partie orientable (7).

2. Palpeur selon la revendication 1, caractérisé en ce que l'élément de sécurité est une tige cylindrique (22) dont l'axe (24) s'étend perpendiculairement à l'axe médian (23) de la partie orientable (7) ou de la pointe de palpage (6), en passant par le centre (25) de la sphère.

3. Palpeur selon la revendication 2, caractérisé en ce que l'élément de guidage se compose de deux profilés (26) parallèles entre lesquels pénètre la tige cylindrique (22) de l'élément de sécurité au moins dans la position neutre de départ.

4. Palpeur selon la revendication 3, caractérisé en ce que les profilés (26) de l'élément de guidage sont réalisés cylindriques, et en ce que l'extrémité de la tige cylindrique (22) de l'élément de sécurité qui pénètre entre les profilés est réalisée conique.

5. Palpeur selon la revendication 4, caractérisé en ce que la tige cylindrique (22) est montée déplaçable axialement dans l'élément sphérique (9) et en ce qu'elle peut être pressée contre l'élément de guidage (11 ou 26) au moyen de la prétension d'un ressort.

6. Palpeur selon l'une des revendications 3 à 5, caractérisé en ce que les profilés (26) de l'élément de guidage sont fixés dans une bague (30) qui sert de point d'appui pour l'élément sphérique (9).

7. Palpeur selon la revendication 6, caractérisé en ce que l'élément sphérique (9) repose directement dans la bague (30).

8. Palpeur selon la revendication 6, caractérisé en ce que la bague (30) présente, sur son côté dirigé vers l'intérieur du boîtier, au moins trois billes d'appui (33), et en ce que l'élément sphérique (9) repose sur les billes d'appui (33).

9. Palpeur selon la revendication 2 ou 3, caractérisé en ce que la bague (30) est enfoncé dans le boîtier à l'extrémité du boîtier (4) du côté tige de palpage.

10. Palpeur selon l'une quelconque des revendications 1 à 9, caractérisé en ce que l'élément sphérique (9) est une calotte sphérique et en ce que l'élément de mesure (5) présente un chariot (12) déplaçable de manière linéaire dans le boîtier (4), et qui peut être pressé au moyen de la prétension d'un ressort contre la surface plane (36) de la calotte sphérique qui est placée à angle droit par rapport à l'axe médian (23) de la partie orientable (7) ou de la pointe de palpage, le chariot (12) pouvant être actionné par le déplacement axial de la pointe de palpage vers l'intérieur du boîtier et par chaque orientation admissible.

11. Palpeur selon la revendication 5, caractérisé en ce que la tige cylindrique (22) peut être bloquée au moyen d'une vis.

12. Palpeur selon la revendication 11, caractérisé en ce que la partie orientable (7) présente un alésage axial fileté (35) pour recevoir la pointe de palpage (6) et qui se termine au-dessus de la tige cylindrique, et en ce que cette dernière peut être bloquée dans l'alésage axial fileté (35) par une vis sans tête (34).
